Europäisches Patentamt

European Patent Office

Office européen des brevets

(19)

(11) Numéro de publication: **0 005 110 B1**

(12) **FASCICULE DE BREVET EUROPEEN**

(45) Date de publication du fascicule de brevet: **12.08.81**

(21) Numéro de dépôt: **79400242.8**

(22) Date de dépôt: **12.04.79**

(51) Int. Cl.³: **F 24 J 3/02, E 04 B 2/88, F 24 F 5/00**

(54) **Façade de bâtiment équipée d'au moins un capteur solaire pour le chauffage de locaux de ce bâtiment.**

(30) Priorité: **17.04.78 ES 468873**
**19.05.78 ES 470040**
**17.04.78 ES 235410 U**

(43) Date de publication de la demande:
**31.10.79 Bulletin 79/22**

(45) Mention de la délivrance du brevet:
**12.08.81 Bulletin 81/32**

(84) Etats Contractants Désignés:
**BE CH DE FR IT LU NL SE**

(56) Documents cités:
**CH - A - 553 386**
**FR - A - 2 303 250**
**FR - A - 2 351 364**
**FR - A - 2 380 509**
**US - A - 2 559 871**
**US - A - 3 863 621**
**US - A - 3 955 555**

(73) Titulaire: **CRISTALERIA ESPANOLA S.A.**
**9, Avenida del Generalisimo**
**Madrid 16 (ES)**

(72) Inventeur: **Goujon, Jean**
**Guzman el Bueno 135-1o**
**Madrid (ES)**

(74) Mandataire: **Brot, Philippe**
**CABINET BROT 83, rue d'Amsterdam**
**F-75008 Paris (FR)**

Courier Press, Leamington Spa, England.

Façade de bâtiment équipée d'au moins un capteur solaire pour le chauffage de locaux de ce bâtiment

L'invention concerne une façade de bâtiment équipé de capteurs solaires alimentant une centrale de conditionnement d'air des locaux de ce bâtiment.

On sait la grande faveur que connaissent actuellement les dispositifs utilisant des sources naturelles d'énergie, telles que l'énergie solaire et l'énergie éolienne. Les capteurs solaires à absorption, en particulier, suscitent un grand intérêt, car ils ont une structure simple, facile à réaliser à l'aide de matériaux peu coûteux, et leur entretien en cours d'utilisation est très réduit.

Ces capteurs solaires emploient habituellement un fluide caloporteur, liquide ou gazeux, qui s'échauffe au contact d'une surface absorbant les radiations solaires, ou "absorbeur", et qui, dans un système d'échange thermique, restitue les calories absorbées à un circuit secondaire d'utilisation. Leur emploi se développe donc, sous cette forme, dans les pays ensoleillés, pour chauffer des locaux d'habitation, et l'on dispose habituellement dans ce but des capteurs solaires sur le toit des immeubles, tandis que le fluide caloporteur échange ses calories avec le circuit d'eau chaude ou le circuit de chauffage des locaux.

Dans d'autres cas, le fluide utilisé est l'air, et les capteurs sont insérés dans un circuit appartenant au système de ventilation des locaux.

On connait également des bâtiments comprenant une façade constituée d'une paroi externe et d'une paroi interne, l'espace entre les deux étant relié a un système de ventilation prélevant l'air réchauffé par chaque capteur logé dans cet espace, lui-même alimenté à partir des locaux, pour l'envoyer vers des moyens de traitements une partie au moins de cet air étant généralement recyclée (brevets US - A - 3 955 555 et CH - A - 553 386).

L'invention se rattache à ce genre d'ensemble de chauffage et a pour objet une façade de bâtiment équipée d'au moins un capteur solaire, le fluide balayant de façon pratiquement complète la paroi exposée au soleil avant de pénétrer dans le capteur solaire, d'où il est envoyé vers la centrale de conditionnement d'air où sa chaleur sera récupérée.

A cet effet, la façade de bâtiment selon l'invention est équipée de capteurs solaires et constituée d'une paroi externe vitrée, d'une paroi interne comportant, sur une partie de sa hauteur, au-dessus de la dalle de plancher renfermant le cas échéant des gaines de ventilation, un panneau d'allège et, sur le reste de sa hauteur, un vitrage, au moins un capteur solaire à air étant disposé entre chaque paroi interne et la paroi externe au niveau du panneau d'allège, des ouvertures étant ménagées dans ladite paroi interne pour prélever à l'aide de moyens d'extraction l'air des locaux et pour l'évacuer, après passage sur le ou les capteurs solaires, vers une centrale de conditionnement d'air. La façade est caractérisée en ce que l'entrée d'air du capteur solaire est placée à la partie haute de ce capteur, sous un tableau inférieur du vitrage de la paroi interne, et en ce que la sortie d'air est prévue à la partie basse dudit capteur, sous la dalle de plancher, de sorte que l'air traverse ledit capteur du haut vers le bas, tandis que les ouvertures de la paroi interne sont placées aux extrémités du vitrage et, éventuellement, du panneau éloignées de ladite entrée d'air du capteur solaire.

Grâce à cette disposition, l'air balaie non seulement l'espace compris entre la paroi externe et le paroi interne pour s'y échauffer avant de pénétrer dans le capteur ou il achève de se réchauffer, mais il est evacué à la sortie du capteur directement en direction de le centrale sans entrer en contact avec des parties plus froide de la façade.

Dans une forme de réalisation de l'invention, la partie basse du vitrage est parvue d'ouvertures par lesquelles l'air pénètre pour remonter vers le capteur solaire situé dans la zone aveugle correspondant au panneau d'allège supporté par le plancher de l'étage supérieur par une ouverture d'un tableau supérieur prolongeant un faux plafond, l'espace entre le tableau inférieur du vitrage de la paroi interne et la paroi externe étant rendu étanche.

Dans une forme préférée de mise en oeuvre de l'invention, le capteur solaire destiné à équiper la façade comporte un vitrage frontal en verre trempé et un absorbeur constitué par une plaque métallique perforée, cet ensemble étant monté dans des glissières internes d'un cadre démontable, lui-même appliqué sur une face arrière porteuse de l'entrée et de la sortie d'air et garnie d'une masse d'un matériau thermiquement isolant.

Les dessins annexés, qui n'ont aucun caractère limitatif, illustrent une forme de mise en oeuvre de l'invention. Sur ces dessins:

La figure 1 est une vue schématique en perspective d'une variante du système de balayage d'air conforme à l'invention;

La figure 2 est une vue schématique en perspective d'une variante du système de balayage d'air conforme à l'invention;

La figure 3 est une coupe horizontale de l'élément de façade conforme à l'invention, illustrant sa mise en place sur l'ossature du bâtiment et la structure du capteur solaire dont il est équipé.

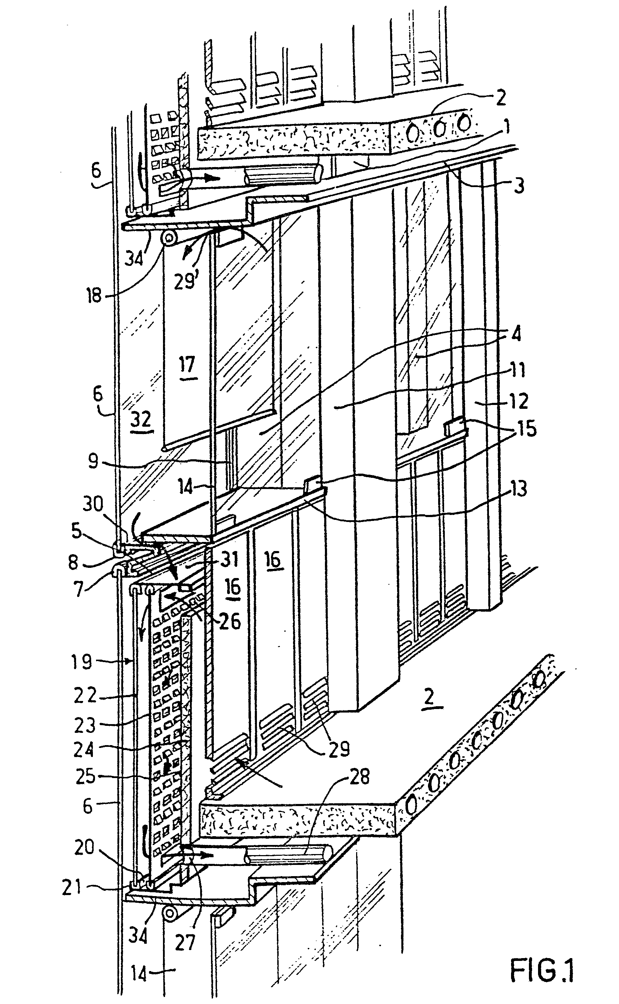

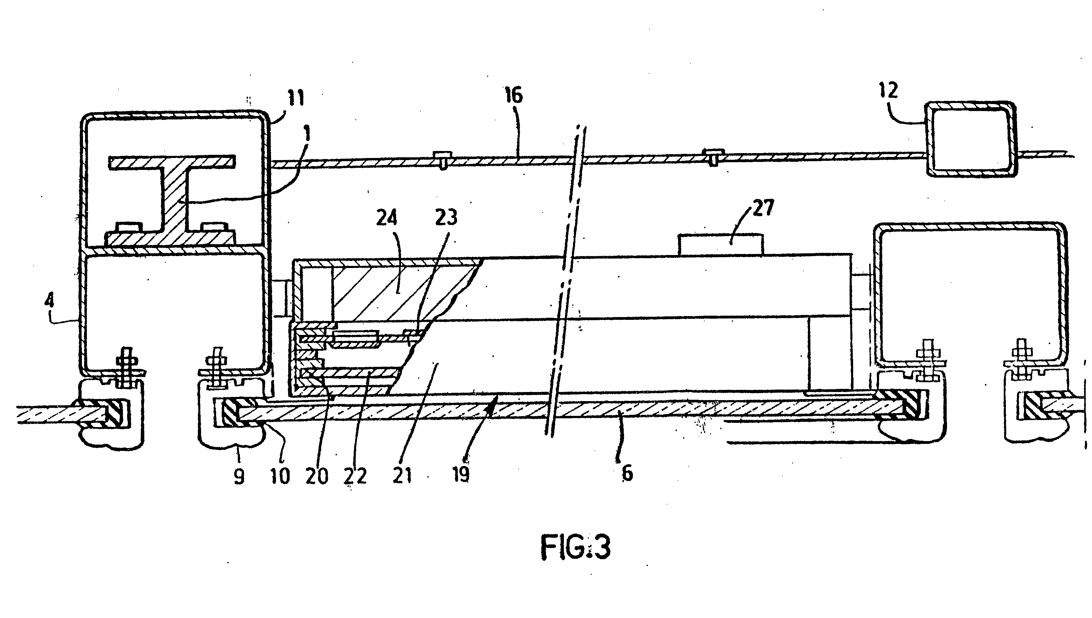

On se référera d'abord aux figures 1 et 3.

Sur l'ossature du bâtiment, qui est formée de poteaux verticaux 1 supportant les différents niveaux de l'immeuble, tels que les planchers 2 doublés de faux-plafonds 3, est montée l'armature de la façade.

L'ossature est formée d'un réseau de poutres verticales creuses 4, à section en C, avec leur ouverture tournée vers l'extérieur, et de traverses 5, dont la section possède une forme de Z dissymétrique, encore assimilable à un U dont l'ouverture est tournée vers l'extérieur.

La paroi externe est formée de vitrages rectangulaires 6, dont les tranches supérieures, inférieures et latérales sont pincées par des profilés tubulaires, fendus sur le côté, respectivement 7, 8 et 9, dans lesquels est logé un mastic 10 et qui sont eux-mêmes boulonnés sur les rebords des poutres et poutrelles de l'armature. Les vitrages 6 sont ainsi supportés de façon élastique et amovible.

Les poutres 4 sont doublées intérieurement par des coffrages 11, pour celles qui sont fixées sur l'ossature, ou des potelets intermédiaires 12. Les ouvertures vers l'extérieur des traverses 5 et des poutres 4 sont destinées à servir, de façon connue en soi, d'organes de guidage et de maintien pour les dispositifs usuels de nettoyage des faces externes des vitres d'un bâtiment.

A l'arrière du vitrage externe 6 et à la hauteur des traverses 5 est disposé un tableau constituant appui de fenêtre 13. Au-dessus de cet appui de fenêtre et constituant la première partie de la paroi interne de la façade est disposée, entre les coffrages 11 et les potelets 12, une série de vitrages 14 pivotant au choix sur des paumelles 15. Entre l'appui de la fenêtre 13 et le plancher 2 sont placés des panneaux d'allège 16. Entre les vitrages 6 et 14 est disposé un store 17, escamotable par enroulement autour d'un rouleau 18.

Un capteur solaire 19 est posé à l'arrière du vitrage externe 6, entre celui-ci et le panneau d'allège 16, et s'étend de part et d'autre du plancher 2, entre deux étages. Le capteur 19 est un capteur à air. Il peut être de n'importe quel type. Une forme de réalisation d'un tel capteur, particulièrement bien adaptée à la façade conformes à l'invention, est toutefois préférée. Comme on le voit sur la figure 1, ce capteur préféré comporte, montés sur des joints coulissants étanches, dans des rainures internes 20 d'un cadre démontable 21 ouvrant sur un côté, un vitrage en verre trempé 22 et une surface absorbante ou "absorbeur" 23, constituée d'une plaque métallique ouverte en haut et en bas, poinçonnée de manière à présenter des languettes faisant saillie, de préférence alternativement, sur ses deux faces et couverte d'une peinture absorbante noire. Comme représenté, les languettes peuvent, par exemple, être disposées suivant des rangées horizontales, les rangées faisant alternativement saillie d'un côté et de l'autre de l'absorbeur 23 pour distribuer l'air sur les deux faces de l'absorbeur.

Le cadre démontable s'appuie lui-même sur une plaque de fermeture comprenant, de façon connue en soi, une masse isolante 24, par exemple un mat de fibres de verre, sur la face avant tourné vers l'absorbeur est disposée une pellicule métallique réfléchissante 25, tel qu'une feuille d'aluminium par exemple. Cette plaque porte une fente d'admission 26 et une ouverture d'échappement 27, qui communique avec une gaine d'aspiration d'air 28 reliée à la centrale de conditionnement d'air.

Comme on le voit sur la figure 1, l'air servant de fluide caloporteur provient des locaux jouxtant la baie vitrée et, avant de pénétrer dans le capteur, balaie, d'une part, l'espace longeant l'allège, d'autre part, l'espace situé entre le vitrage externe et les vitrages internes à l'emplacement des fenêtres. A cet effet, le panneau d'allège 16 est percé à sa base de fentes 29, par lesquelles l'air de la pièce pénètre à l'arrière de la masse isolante 24. De même, les fentes 29' laissées entre les vitrages internes et leurs entablements, puis la fente 30 entre l'appui de fenêtre et la traverse 5 permettent à l'air de pénétrer vers l'espace 31 au-dessus du capteur, en balayant l'espace 32 correspondant aux fenêtres. On peut, le cas échéant, prévoir des joints étanches sur trois bords des vitrages 14, à l'exception bien entendu, du bord supérieur.

L'air pénètre ensuite par la fente 26 à la partie supérieure du capteur et redescend en léchant la surface de l'absorbeur 23 et en serpentant entre les ouvertures dont il est percé, pour se réchauffer ainsi à son contact. A la base du capteur, la gaine 28 évacue l'air chaud en direction du système de ventilation ou de climatisation de l'immeuble. Bien entendu, ce système de ventilation sera conçu de façon à répartir l'air chaud entre les différents locaux de l'immeuble, en fonction de la température qui y règne, et à récupérer les calories de cet air chaud pour d'autres applications avant de le recycler dans les locaux, lorsque ceux-ci n'auront pas besoin d'être réchauffés, en été par exemple.

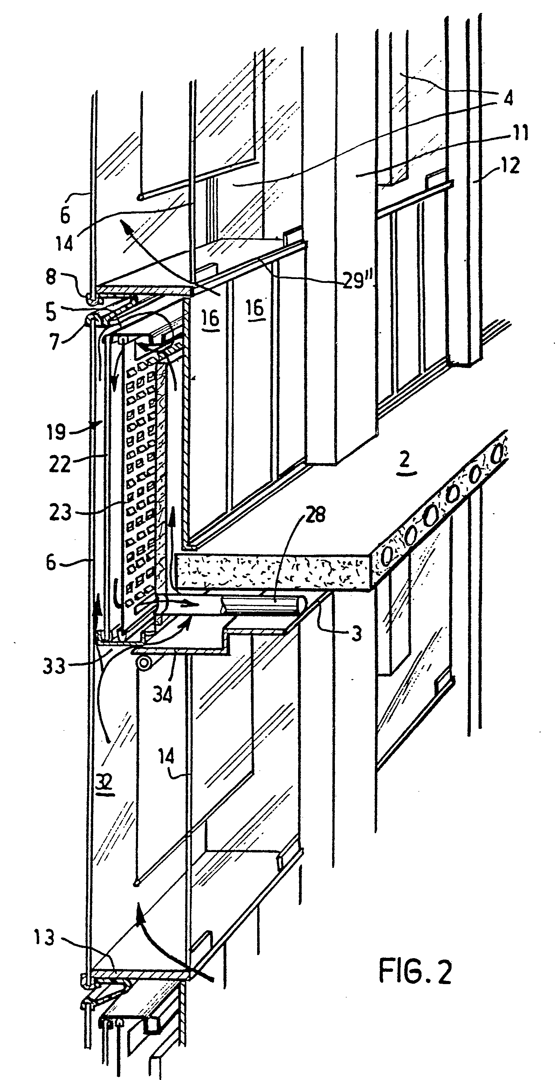

Cependant, ainsi qu'on peut le voir sur la figure 2, où les organes déjà décrits conservent les mêmes références, il s'est avéré plus avantageux d'alimenter le capteur à partir de l'étage inférieur en supprimant les fentes 29 des panneaux d'allège et en rendant étanche le joint 30 de chaque appui de fenêtre, mais en ménageant au contraire une ouverture 33 dans le tableau supérieur 34 qui prolonge le faux-plafond. On peut alors à nouveau prévoir des joints étanches sur trois côtés des vitrages 14, mais en laissant libre cette fois en 29'' leur bord inférieur; on améliore ainsi le balayage de l'ensemble de la façade et par conséquent le rendement thermique.

## Revendications

1. Façade de bâtiment équipée de capteurs solaires et constituée d'une paroi externe (6) vitrée, et d'une paroi interne comportant, sur une partie de sa hauteur, au-dessus de la dalle de plancher (2) renfermant le cas échéant des gaines de ventilation (28), un panneau d'allège (16) et, sur le reste de sa hauteur, un vitrage (14), au moins un capteur solaire à air (19) étant disposé entre chaque paroi interne et la paroi externe au niveau du panneau d'allège (16), des ouvertures (29, 29', 29") étant ménagées dans ladite paroi interne pour prélever à l'aide de moyens d'extraction l'air des locaux et pour l'évacuer, après passage sur le ou les capteurs solaires (19), vers une centrale de conditionnement d'air, caractérisée en ce que l'entrée d'air (26) du capteur solaire (19) est placée à la partie haute de ce capteur, sous un tableau inférieur (13) du vitrage (14) de la paroi interne, et en ce que la sortie d'air est prévue à la partie basse dudit capteur (19), sous la dalle de plancher (2), de sorte que l'air traverse ledit capteur du haut vers le bas, tandis que les ouvertures (29, 29', 29") de la paroi interne sont placées aux extrémités du vitrage (14) et, éventuellement, du panneau d'allège (16) éloignées de ladite entrée d'air (26) du capteur solaire.

2. Façade selon la revendication 1, caractérisée en ce que la partie basse du vitrage (14) est pourvue d'ouvertures (29") par lesquelles l'air pénètre pour remonter vers le capteur solaire (19) situé dans la zone aveugle correspondant au panneau d'allège (16) supporté par le plancher (2) de l'étage supérieur par une ouverture (33) d'un tableau supérieur (34) prolongeant un faux-plafond, l'espace entre le tableau inférieur (13) du vitrage (14) de la paroi interne et la paroi externe étant rendu étanche.

3. Façade selon l'une des revendications 1 et 2, caractérisée en ce que le capteur solaire à air (19) comporte un vitrage frontal en verre trempé (22) et un absorbeur (23) constitué par une plaque métallique perforée, cet ensemble étant monté dans des glissières internes (20) d'un cadre démontable (21), lui-même appliqué sur une face arrière porteuse de l'entrée et de la sortie d'air et garnie d'une masse (24) d'un matériau thermiquement isolant.

### Patentansprüche

1. Gebäudefassade mit Solarzellen bestehend aus einer verglasten Außenwand (6) und einer Innenwand, die über einen Teil ihrer Höhe oberhalb de gegebenenfalls Ventilationshüllrohre (28) einschließenden Fußbodenplatte (2) eine Stützplatte (16) und über den Rest ihrer Höhe eine Verglasung (14) aufweist, wobei wenigstens eine Luftsolarzelle (19) zwischen jeder Innenwand und der Außenwand in Höhe der Stützplatte (16) angeordnet ist, wobei Öffnungen (29, 29', 29") in dieser Innenwand ausgespart sind, um mit Hilfe von Abzieheinrichtungen Luft aus den Räumen zu entnehmen und diese nach Passieren über die Solarzelle(n) (19) gegen eine Luftkonditionierungszentrale abzuführen, dadurch gekennzeichnet, daß der Lufteintritt (26) der Solarzelle (19) am oberen Teil de Solarzelle unter einer unteren Tafel (13) der Verglasung der Innenwand angeordnet ist und daß der Luftaustritt am unteren Teil der Zelle (19) unter der Fußbodenplatte (2) derart vorgesehen ist, daß die Luft diese Zelle von oben nach unten durchströmt, während die Öffnungen (29, 29', 29") der Innenwand an den Enden der Verglasung (14) und gegebenenfalls der Stützplatte (16) entfernt von dem Lufteintritt (26) der Solarzelle angeordnet sind.

2. Gebäudefassade nach Anspruch 1, dadurch gekennzeichnet, daß der untere Teil der Verglasung (14) mit Öffnungen (29") versehen ist, über welche die Luft eindringt, um zur Solarzelle (19), die in der Blendenzone entsprechend der vom Boden (2) der oberen Etage getragenen Stützplatte (16) über eine Öffnung (33) eine oberen eine Zwischendecke verlängemden Platte (34) aufzusteigen, wobei der Raum zwischen der unteren Platte (13), der Verglasung (14), der Innenwand und der Außenwand dicht ausgebildet ist.

3. Fassadenplatte nach einem der Ansprüche 1 und 2, dadurch gekennzeichnet, daß die Luftsolarzelle (19) eine Stirnverglasung aus vorgespanntem Glas (22) sowie einen Absorber (23) umfaßt, der aus einer metallischen perforierten Platte gebildet ist, wobei die Anordnung in inneren Gleitschienen (20) eines abnehmbaren Rahmens (21) montiert ist, der selbst gegen eine rückseitige Trägerfläche des Lufteintritts und -austritts gepresst und mit einer Masse (24) eines thermisch isolierenden Materials ausgekleidet ist.

### Claims

1. A building frontage equipped with solar energy collectors and formed from an external glass wall (6), and an internal wall comprising, over a part of its height, above the flooring slab (2) containing if need be ventilation ducts (28), a breastwork panel (16) and, over the rest of its height, glazing (14), at least one air solar energy collector (19) being disposed between each internal wall and the external wall at the level of the breastwork panel (16), openings (29, 29', 29") being provided in said internal wall to take air from the premises by extraction means and to discharge it, after passing over the solar energy collector(s) (19), towards an air-conditioning unit, characterized in that the air intake (26) of the solar energy collector (19) is placed at the top part of this collector, under a lower panel (13) of the glazing (14) of the internal wall, and in that the air outlet is provided at the low part of said collector (19), under the flooring slab (2), so that the air passes through said collector from top to bottom, whereas the openings (29, 29', 29") of the internal wall are placed at the ends of the glazing (14) and, possibly, of the breastwork panel (16) removed from said air intake (26) of the solar energy collector.

2. Fronting according to claim 1, characterized in that the low part of the glazing (14) is provided with openings (29") through which the air penetrates to rise up towards the solar energy collector (19) situated in the blind zone corresponding to the breastwork panel (16) supported by the flooring of the upper storey, through an opening (33) in an upper panel (34) extending a false ceiling, the space between the upper panel (13) of the glazing (14) of the internal wall and the external wall being sealed.

3. Frontage according to one of claims 1 and 2, characterized in that the air solar energy collector (19) comprises front glazing made from tempered glass (22) and an absorber (23) formed from a perforated metal plate, this unit being mounted in internal slides (20) of a removable frame (21), itself applied to a rear face bearing the air intake and outlet and lined with a mass (24) of a heat-insulating material.

FIG.1

FIG. 2

FIG.3